# EUROPEAN PATENT APPLICATION

(11) **EP 4 734 550 A1**
(43) Date of publication of application: **29.04.2026**
(21) Application number: 24886085.0
(22) Date of filing: 18.10.2024
(51) Int. Cl.: H04R 3/12, H04R 5/033

(54) **AUDIO OUTPUT APPARATUS AND METHOD THEREFOR**

(30) Priority: 01.11.2023 KR 20230149232
(71) Applicant: Samsung Electronics Co., Ltd., Suwon-si, Gyeonggi-do 16677 (KR)
(72) Inventor: LEE, Yoonjae, Suwon-si Gyeonggi-do 16677 (KR); KIM, Jongwoo, Suwon-si Gyeonggi-do 16677 (KR); KIM, Sunmin, Suwon-si Gyeonggi-do 16677 (KR); KIM, Hanki, Suwon-si Gyeonggi-do 16677 (KR)
(74) Representative: Appleyard Lees IP LLP
(86) International application number: PCT/KR2024/015852
(87) International publication number: WO 2025/095410

(57) **Abstract**

An audio output apparatus is disclosed. The present apparatus comprises: a communication unit; a memory; an audio output unit; and a processor. When information regarding an external apparatus is received through the communication unit, the processor: determines a role of each apparatus on the basis of information stored in the memory and the received information; divides one piece of audio content into a plurality of audio elements; transmits an audio element corresponding to a role of the external apparatus to one external apparatus; and controls the audio output unit to output the audio element according to an output of the external apparatus. Accordingly, harmonious audio enjoyment becomes possible.

## Description

### [TECHNICAL FIELD]

The disclosure relates to an audio output apparatus and a method therefor.

### [BACKGROUND ART]

Fueled by the development of electronic technologies, various types of electronic products are being used. Among them, electronic apparatuses that include output means such as a display or a speaker, etc., and provide various types of contents to users are also being distributed steadily.

As a representative product among them, there may be a television (TV). A TV can output a video frame through a display, and can output an audio signal synchronized to the video frame by using a speaker in itself. In the case of recent TVs, a bezel around a display and a side surface housing, etc. are often manufactured to be very slim, for improving the exterior design. In this case, even if an audio signal is output through a speaker included in the TV itself, it may be difficult for a user to listen to the signal at a desired level. To address this, users often use a sound bar or an external speaker, etc. by connecting them to the TV.

In this manner, several electronic products that can output audio (i.e., audio output apparatuses) may be used within the same environment. However, most users just use them by setting audio outputs of some apparatuses to be output at a sound bar or an external speaker.

Accordingly, there is a rising need for a method by which, within an environment wherein a plurality of audio output apparatuses are provided, the apparatuses can be used effectively.

### [DISCLOSURE OF INVENTION]

### [SOLUTION TO PROBLEM]

The disclosure is for addressing the aforementioned need, and an audio output apparatus according to an embodiment of the disclosure may include a communicator for performing communication with at least one external apparatus, memory storing information on the audio output apparatus, an audio outputter, and a processor, wherein the processor may, based on receiving information on the at least one external apparatus through the communicator, determine roles of each of the audio output apparatus and the at least one external apparatus based on the information stored in the memory and the received information, divide one audio content into a plurality of audio elements, transmit an audio element corresponding to the role of the at least one external apparatus among the plurality of audio elements to the at least one external apparatus through the communicator, and control the audio outputter to output an audio element corresponding to the role of the audio output apparatus among the plurality of audio elements according to an output of the at least one external apparatus, and based on a state of one of the audio output apparatus or the at least one external apparatus being changed, adjust at least one of the roles of each of the audio output apparatus and the at least one external apparatus or an audio element to be reproduced.

Meanwhile, an output method according to an embodiment of the disclosure includes the steps of receiving information on at least one external apparatus, determining roles of each of the audio output apparatus and the at least one external apparatus based on information on the audio output apparatus and the received information, dividing one audio content into a plurality of audio elements, transmitting an audio element allotted to the at least one external apparatus among the plurality of audio elements to the at least one external apparatus, outputting an audio element allotted to the audio output apparatus among the plurality of audio elements according to an output of the at least one external apparatus, and based on a state of one of the audio output apparatus or the at least one external apparatus being changed, adjusting at least one of the roles of each of the audio output apparatus and the at least one external apparatus or an audio element to be reproduced.

### [Brief Description of Drawings]

FIG. 1 is a diagram for illustrating operations of audio output apparatuses according to at least one embodiment of the disclosure;
FIG. 2 is a block diagram illustrating a configuration of an audio output apparatus according to at least one embodiment of the disclosure;
FIG. 3 is a diagram for illustrating a method of correcting an audio output characteristic of an audio output apparatus according to an embodiment of the disclosure;
FIG. 4 is a block diagram illustrating a configuration of an audio output apparatus according to various embodiments embodiment of the disclosure;
FIG. 5 is a diagram illustrating an example of a UI screen for setting an audio synchronized output function according to an embodiment of the disclosure;
FIG. 6 is a diagram illustrating an example of a notification message notifying a state wherein audio synchronized output is impossible according to an embodiment of the disclosure;
FIG. 7 and FIG. 8 are diagrams for illustrating a method of sensing a change of a location of an external apparatus according to an embodiment of the disclosure;
FIG. 9 is a diagram for illustrating operations of an audio output apparatus according to locations of external apparatuses according to an embodiment of the disclosure;
FIG. 10 and FIG. 11 are diagrams for illustrating operations of an audio output apparatus according to various embodiments of the disclosure;
FIG. 12 is a flow chart for illustrating an output method according to at least one embodiment of the disclosure;
FIG. 13 is a timing diagram for illustrating an example of a linking process of a plurality of audio output apparatuses according to an embodiment of the disclosure; and
FIG. 14 is a diagram for illustrating an operation of a server device according to at least one embodiment of the disclosure.

### [MODE FOR INVENTION]

As terms used in the various embodiments of the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. Further, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or "B" or "A and B."

Further, the expressions "first," "second," and the like used in this specification may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, as long as they do not obviously mean differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the disclosure, "a module" or "a part" performs at least one function or operation, and may be implemented as hardware or software, or as a combination of hardware and software. In addition, a plurality of "modules" or "parts" may be integrated into at least one module and implemented as at least one processor (not shown), except "a module" or "a part" that needs to be implemented as specific hardware.

Also, in this specification, the term "user" may refer to a person who uses an electronic apparatus or an apparatus that uses an electronic apparatus (e.g.: an artificial intelligence electronic apparatus).

Hereinafter, an embodiment of the disclosure will be described in more detail with reference to the accompanying drawings.

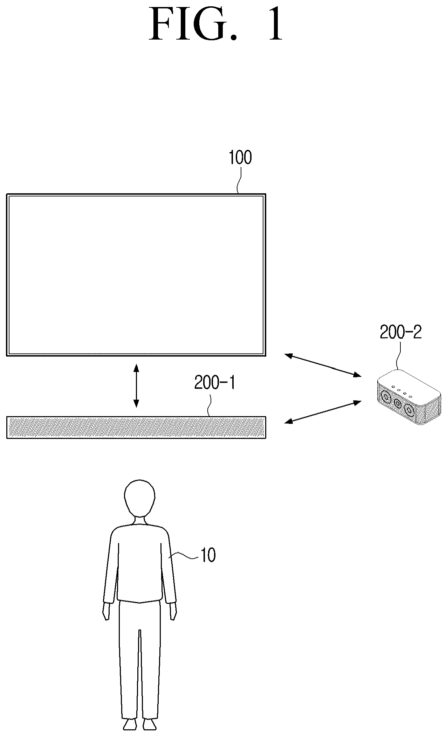

FIG. 1 is a diagram for illustrating operations of audio output apparatuses according to at least one embodiment of the disclosure. According to FIG. 1, a plurality of audio output apparatuses 100, 200-1, 200-2 may perform communication with one another. In the disclosure, an audio output apparatus means an apparatus that can output audio. Also, in the disclosure, an audio output apparatus may include a speaker in itself, but is not necessarily limited thereto, and it may include an apparatus that is connected with an external speaker and outputs audio by using the external speaker.

In FIG. 1, it was illustrated that the first audio output apparatus 100 is a TV, and the second and third audio output apparatuses 200-1, 200-2 are respectively a sound bar and a wireless speaker, but the disclosure is not limited thereto, and each audio output apparatus 100, 200-1, 200-2 may be implemented as various types of electronic apparatuses. Specifically, each audio output apparatus 100, 200-1, 200-2 may be implemented as products in various shapes such as a TV, a sound bar, a PC, a laptop PC, a mobile phone, a tablet PC, a refrigerator, a washing machine, an electric rice cooker, a cleaning robot, a speaker, a sound device, a projector, etc.

Each audio output apparatus 100, 200-1, 200-2 may reproduce and output one audio content by being linked with one another according to a user's selection. Such a function may be referred to as various terms like an audio synchronized output function, a symphony function, (or a Q-symphony function), a surround sound function, etc., but it is referred to as an audio synchronized output function in the disclosure.

When the audio synchronized output function is selected, at least one of each audio output apparatus 100, 200-1, 200-2 may perform a main role, and the remaining audio output apparatuses may perform a sub role. The main role may be a role of outputting at least one main element among a plurality of audio elements constituting one audio content. The sub role may be a role of outputting the remaining audio elements (i.e., sub elements) excluding the main element among a plurality of audio elements. In the disclosure, roles were divided into two roles such as a main role and a sub role, but the number of roles may be divided more variously. Also, in the disclosure, roles are described as a main role and a sub role, but roles may be expressed by being modified variously such as a primary role and a secondary role, or a host role other than them.

An audio element includes elements constituting one audio signal. Alternatively, an audio element may be referred to as a sound source, a sound source object, etc., but it will be described as an audio element in the disclosure.

The plurality of audio output apparatuses 100, 200-1, 200-2 may perform one of a main role or a sub role according to the locations or audio output characteristics of each apparatus. Role division may be performed by one of the plurality of audio output apparatuses 100, 200-1, 200-2, or the plurality of audio output apparatuses 100, 200-1, 200-2 may respectively identify their roles. Alternatively, a server device (not shown) separately provided other than the plurality of audio output apparatuses 100, 200-1, 200-2 may divide roles in consideration of the locations or the audio output characteristics, etc. of each of the plurality of audio output apparatuses 100, 200-1, 200-2.

An audio output apparatus that performs the main role reproduces and outputs at least one audio element allotted to the main role among the plurality of audio elements. An audio output apparatus that performs the sub role reproduces and outputs at least one audio element allotted to the sub role among the plurality of audio elements.

The audio output apparatuses of the main role and the sub role may reproduce and output audio elements of each of them by being synchronized to one another, and thus the user can appreciate an audio content stereoscopically. In particular, the main role and the sub role are determined according to the locations or the audio output characteristics of each apparatus, and thus the user can appreciate an audio content that is reproduced at the optimal quality in his or her location. In a case where the locations or the states of each apparatus are changed, role division and element classification tasks, etc. may be performed again. Accordingly, the audio output apparatuses can maintain the user's satisfaction by adaptively responding to various events.

The operation of dividing an audio content into a plurality of audio elements, and then classifying the elements into a main element and sub elements may be performed by one apparatus among the plurality of audio output apparatuses 100, 200-1, 200-2, or performed by each of the plurality of audio output apparatuses 100, 200-1, 200-2.

In a case where it is implemented such that one apparatus among the plurality of audio output apparatuses 100, 200-1, 200-2 performs the operations, the audio output apparatus that performs the main role may perform the aforementioned role division and element classification operations, but the disclosure is not necessarily limited thereto, and an apparatus that is in charge of the sub role among the plurality of audio output apparatuses 100, 200-1, 200-2 may perform at least one operation between the role division operation and the element classification operation if it has more superior operation capacity or speed than the other apparatuses. Alternatively, if an external source is connected with one apparatus, the apparatus may perform the element classification operation, and may allot audio elements for each role.

For the convenience of explanation, the plurality of audio output apparatuses 100, 200-1, 200-2 will respectively be referred to as the first to third audio output apparatuses.

For example, while the first audio output apparatus 100 is placed as in FIG. 1, if the second audio output apparatus 200-1 is placed in the lower end or the front side of the first audio output apparatus 100, and the third audio output apparatus 200-2 is located on the right side of the first audio output apparatus 100, the first audio output apparatus 100 or the second audio output apparatus 200-1 in the front direction based on the location of the user 10 may perform the main role. As in FIG. 1, if the locations of the first audio output apparatus 100 and the second audio output apparatus 200-1 are similar, an apparatus that has a better audio output characteristic between the two apparatuses may perform the main role. As in FIG. 1, if the first audio output apparatus 100 is a TV, and the second audio output apparatus 200-1 is a sound bar, as an audio output characteristic of a sound bar is better in general, the second audio output apparatus 200-1 may perform the main role, and the remaining audio output apparatuses 100, 200-2 may perform the sub role. Ultimately, the second audio output apparatus 200-1 may reproduce and output an audio element corresponding to the main role (e.g., vocal, a center signal, etc.), and the first audio output apparatus 100 and the third audio output apparatus 200-2 may reproduce and output the remaining audio elements identically. Alternatively, as in FIG. 1, if the first audio output apparatus 100 is located in the center based on the location and the gaze direction of the user, and the third audio output apparatus 200-2 is located on the right side, the first audio output apparatus 100 may reproduce a sub element corresponding to the center among the sub elements, and the third audio output apparatus 200-2 may reproduce a sub element corresponding to the right side. The method of classifying a main element corresponding to a main role and sub elements corresponding to the sub role among the plurality of audio elements will be described in detail again in the parts described below.

As a plurality of different audio output apparatuses output one audio content harmoniously as described above, the user's satisfaction can be improved greatly.

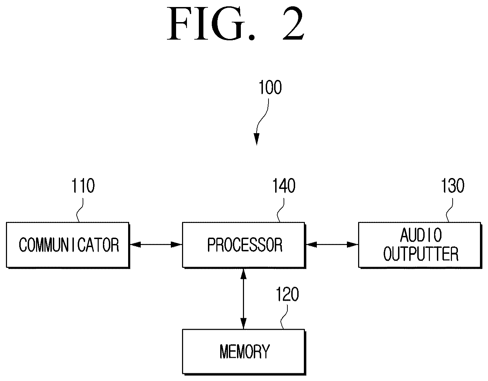

FIG. 2 is a block diagram illustrating a configuration of an audio output apparatus according to an embodiment of the disclosure. In FIG. 2, explanation is described based on a case wherein the first audio output apparatus 100 illustrated in FIG. 1 performs both of the roles of determining the roles of each apparatus, and providing an audio content by separating it for each role. For the convenience of explanation, hereinafter, the first audio output apparatus 100 will be referred to as an audio output apparatus, and the remaining audio output apparatuses including the second audio output apparatus and the third audio output apparatus 200-1, 200-2 will all be referred to as external apparatuses. The remaining audio output apparatuses other than the first audio output apparatus 100 may have the same configuration as in FIG. 2, but are not limited thereto, and they may include various additional configurations or modified configurations.

According to FIG. 2, the audio output apparatus 100 includes a communicator 110, memory 120, an audio outputter 130, and a processor 140.

The communicator 110 is a component for performing communication with various external apparatuses. The communicator 110 may transmit and receive various types of signals and data with external apparatuses through communication methods such as Bluetooth, AP-based Wi-Fi (Wi-Fi, a wireless LAN network), Zigbee, a wired/wireless local area network (LAN), a wide area network (WAN), an Ethernet, the IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. Also, according to an embodiment, the communicator 110 may receive, from other ambient audio output apparatuses, i.e., external apparatuses, various types of information and the like related to the apparatuses.

The memory 120 is a component for storing various types of data, programs, instructions, etc. The memory 120 may be implemented in the form of memory embedded in the audio output apparatus 100, or implemented in the form of memory that can be attached to or detached from the audio output apparatus 100 according to the use of stored data. Specifically, the memory 120 may be implemented as one or a plurality of memories among dynamic RAM (DRAM), static RAM (SRAM), or synchronous dynamic RAM (SDRAM), one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD), an external hard, and a USB stick memory. In FIG. 2, it was illustrated that the memory 120 is a separate component from the processor 140, but depending on embodiments, the entire or a partial memory may be integrated into the processor 140 and included as one component.

The memory 120 may store various types of information and data received from external apparatuses through the communicator 110. Also, the memory 120 may store information and data to be transmitted to each external apparatus. Further, the memory 120 may store various types of information about the audio output apparatus 100. For example, the memory 120 may store detailed specification information such as production information like the product name or the serial number of the audio output apparatus 100, the manufacturing date, etc., information on the manufacturing company or factory, etc., location information, audio output characteristic information, the performance of the processor or the memory capacity, etc. The location information includes information that can specify a point wherein the audio output apparatus 100 is located within the space wherein the audio output apparatus 100 is installed (e.g., in a home). For example, if the audio output apparatus 100 includes a LiDAR sensor, the audio output apparatus 100 may identify a location within a space based on a sensing value of the LiDAR sensor. Alternatively, the user may directly input the location of the audio output apparatus 100. The memory 120 may store the location information input by the user as it is. Also, the audio output characteristic information includes various types of information related to audio output. For example, a volume curve, a sound pressure level (SPL), a maximum SPL, a headroom, input sensitivity, max power, a crossover frequency, a gain, speaker impedance, and other parameters, etc. may be included in the audio output characteristic information.

A volume curve indicates a changed amount of a volume according to a change of a volume level. A sound pressure level indicates the strength of a sound by a sound pressure, and means a value that indicates a ratio to a standard sound pressure as a decibel (dB). A headroom means a difference between a peak level and a root mean square (RMS) level of an audio signal. In general, as a headroom is bigger, the strength and the fluctuation of a sound are more intense. Input sensitivity means an input voltage necessary for a specific audio apparatus to output a rated output. It can be said that as a necessary input voltage value is lower, input sensitivity is higher. A crossover frequency means a boundary of divided sound ranges when all audible frequency bands are divided into a low sound range and a high sound range, etc., and a plurality of speaker devices take each sound range and reproduce it. A gain indicates a degree of amplifying an input voltage signal, and is a value that compared the output level thereof with an input level or a standard level, and is generally displayed as a decibel (dB). Speaker impedance is inversely proportional to an output of an amp, and if the impedance of a speaker is low, an output of an amp increases, and it may vary according to a frequency band wherein audio is reproduced.

The processor 140 is a component for controlling the overall operations of the audio output apparatus 100. The processor 140 may be implemented as a digital signal processor (DSP) processing digital image signals, a microprocessor, a graphics processing unit (GPU), an artificial intelligence (AI) processor, a neural processing unit (NPU), and a time controller (TCON). However, the disclosure is not limited thereto, and the processor 140 may include one or more of a central processing unit (CPU), a micro controller unit (MCU), a micro processing unit (MPU), a controller, an application processor (AP) or a communication processor (CP), and an ARM processor, or may be defined by the terms. Also, the processor 140 may be implemented as a system on chip (SoC) having a processing algorithm stored therein or large scale integration (LSI), or implemented in the forms of an application specific integrated circuit (ASIC) and a field programmable gate array (FPGA). Alternatively, the processor 140 may be implemented as a processor that can execute an artificial intelligence model stored in the memory 120. In a case where the processor 140 includes an artificial intelligence-dedicated processor, the processor may be designed as a hardware structure specified for processing of a specific artificial intelligence model. For example, the processor 140 may include hardware chips such as an ASIC, an FPGA, etc. specified for processing of a specific artificial intelligence model.

The processor 140 may perform various operations based on various types of data, programs, instructions, etc. stored in the memory 120.

In a case where a plurality of external apparatuses 200-1, 200-2 equipped with an audio output function exist in the surroundings as in FIG. 1, the processor 140 may transmit and receive various types of signals and data with these apparatuses through the communicator 110.

For example, if detailed specification information such as production information like the product name or the serial number of an external apparatus, the manufacturing date, etc., information on the manufacturing company or factory, etc., location information, audio output characteristic information, the performance of the processor or the memory capacity, etc. is received through the communicator 110, the processor 140 may store the information in the memory 120. The location information of an external apparatus may be directly received from the external apparatus, but the disclosure is not necessarily limited thereto, and the user may directly input the information at the audio output apparatus 100 but not the external apparatus. When information on the location of the external apparatus is input, the processor 140 may include the input location information in the information of the external apparatus and store it together in the memory 120.

As described above, if information on one or more external apparatuses is received through the communicator 110, the processor 140 determines the roles of each of the audio output apparatus and the external apparatuses based on the information stored in the memory 120 and the received information. If three audio output apparatuses 100, 200-1, 200-2 are arranged within the space as in FIG. 1, the processor 140 may determine the roles of each audio output apparatus 100, 200-1, 200-2.

Determination of roles may be performed according to various standards. As an example, the processor 140 may determine roles based on the locations of each apparatus.

Taking FIG. 1 as an example, if communication with two external apparatuses 200-1, 200-2 is connected, the processor 140 may first determine whether each external apparatus 200-1, 200-2 is in a state of being able to perform the audio synchronized output function.

Specifically, the processor 140 identifies information of each external apparatus. In a case where an output audio output characteristic of an external apparatus is different from an audio output characteristic of the audio output apparatus 100 by greater than or equal to a predetermined threshold value, the processor 140 may determine that the audio synchronized output function is impossible. For example, in a case where audio is output at a sound pressure level that is noticeably lower than the sound pressure level of the audio output apparatus 100, or a difference between frequency bands wherein audio can be reproduced and output is big, the processor 140 may determine that audio synchronized output with the external apparatus is impossible. Alternatively, in a case where an external apparatus is distanced too far compared to the location of the audio output apparatus 100, it is difficult for audio of the same size to be transmitted to the user location even if audio synchronized output is performed. Accordingly, the processor 140 may calculate a distance between apparatuses based on the location information of the audio output apparatus 100 and the external apparatuses 200-1, 200-2, and if the distance is greater than or equal to a predetermined threshold distance, the processor 140 may identify that the audio synchronized output function is impossible.

Alternatively, even if the distance between the plurality of audio output apparatuses 100, 200-1, 200-2 is close, the wall or the room door, the furniture or other home appliances, etc. inside the space may block between the apparatuses. In this case, even if the audio synchronized output function is performed, the user cannot appreciate an audio content which he or she can be satisfied with. The processor 140 determines whether there is an obstacle that may hinder transmission of an audio signal between the apparatuses based on a map for the space and the locations of each apparatus. If it is determined that there is an obstacle, the processor 140 may determine that the audio synchronized output function is impossible. The map information may be directly input by the user at the audio output apparatus 100 through a user interface (not shown), or may be received from an external apparatus and stored in the memory 120. For example, in a case where a robot cleaner that cleans the inside of a space exists, the robot cleaner may generate a map including the size or the form of the space and the locations or the sizes, and the forms of internal obstacles by using various types of sensors while performing indoor cleaning. The processor 140 may receive information on such a map from the robot cleaner, and store it in the memory 120.

Alternatively, among the audio output apparatuses, there may be a model wherein an audio synchronized output function is not supported or impossible because of the hardware or software specification. Also, there may be an apparatus that cannot perform such a function due to differences in the manufacturing company or the O/S, etc., and other policy reasons, etc. The processor 140 may identify whether an apparatus is an apparatus wherein an audio synchronized output function is not supported based on the information of each external apparatus 200-1, 200-2.

If it is determined that the external apparatuses 200-1, 200-2 are apparatuses wherein audio synchronized output is possible, the processor 140 may determine the roles of each apparatus based on the information on each of the audio output apparatus 100 and the external apparatuses 200-1, 200-2.

According to an embodiment, the processor 140 may identify the locations of each of the audio output apparatus and the external apparatuses 100, 200-1, 200-2, and then determine the roles of the audio output apparatus and the at least one external apparatus respectively as one of a main role and a sub role based on the identified locations.

Taking FIG. 1 as an example, the user is looking at the first and second audio output apparatuses 100, 200-1, and the third audio output apparatus 200-2 is arranged on the right side of the first and second audio output apparatuses 100, 200-1.

The processor 140 of the first audio output apparatus 100 may identify the location of the user, and then determine an apparatus at the closest distance from the user among the entire audio output apparatuses 100, 200-1, 200-2 as the main role. The processor 140 may identify the location of the user based on sensing values of various sensors such as an image sensor, an infrared sensor, an ultrasonic sensor, a microphone, etc. included in the first audio output apparatus 100. For example, in a case where an image sensor is included, the processor 140 may identify an object corresponding to the user among a plurality of photographed images photographed at the image sensor, and analyze the size and the location, and the form, etc. of the object, and identify how far the user is distanced from the first audio output apparatus 100, and on which point the user is located within the space, and which side the user is looking at, etc. Alternatively, in a case where an infrared sensor or an ultrasonic sensor is included, the processor 140 may assume the location and the distance of the user based on the sizes or the received directions of signals that are reflected after being transmitted from each sensor. The processor 140 may identify the locations of the other audio output apparatuses 200-1, 200-2 by using at least one of these sensors, but the disclosure is not necessarily limited thereto, and as described above, the processor 140 may directly receive location information from the other audio output apparatuses 200-1, 200-2, or may receive the information from the user.

Alternatively, the processor 140 may determine at least one of the entire audio output apparatuses 100, 200-1, 200-2 as the main role based on location information directly input by the user through the user interface (e.g., a touch screen, a remote control, a mouse, a keyboard, etc.) of the first audio output apparatus 100.

There may be apparatuses of which distances are close among the plurality of audio output apparatuses. As in FIG. 1, in a case where the first audio output apparatus 100 is a TV, and the second audio output apparatus 200 was implemented as a sound bar, the distances between the user 10 and the first and second audio output apparatuses 100, 200-1 are almost the same. In other words, the locations of the two apparatuses may be deemed to be within a similar range. A similar range means that a distance between locations is within a predetermined distance range. For example, the processor 140 may determine that apparatuses within a distance range of 50cm are within a similar range. If the locations of each apparatus is within the similar range, the processor 140 may compare audio output characteristics among the information of each of the apparatuses, and determine the roles of the audio output apparatus and the at least one external apparatus respectively as one of the main role or the sub role. For example, the processor 140 may determine an apparatus wherein Max SPL information is the biggest as the main role, and determine the remaining apparatuses as the sub role. Here, the Max SPL information means a maximum value of a sound pressure level (SPL). The sound pressure level means an index that digitized the size of a sound for objectifying it. The sound pressure level SPL may be calculated by an operation formula such as 20log₁₀(P/Pref). In the operation formula, P may be a root mean square (rms) value of an instantaneous sound pressure, and Pref may be a standard sound pressure. In the air, the standard sound pressure Pref may be 20µPa.

The processor 140 may compare various audio output characteristics other than the above, and determine an apparatus that has a better audio output characteristic as the main role.

In the embodiment above, it was explained that roles are determined first based on the locations, and then in a case where the locations are similar, the audio output characteristics are compared and the roles are determined again, but in another embodiment, roles may be determined based only on audio output characteristics but not based on the locations. Alternatively, in a case where a plurality of apparatuses exist in similar locations, the processor 140 may determine all of the roles of these apparatuses as the main role.

When the main role and the sub role are determined, the processor 140 corrects the audio output characteristics of the audio output apparatuses of the sub role according to the audio output characteristic of the audio output apparatus of the main role. As an example, in a case where the audio output apparatus 100 in FIG. 2 was determined as the main role, the processor 140 may transmit the information on the audio output characteristics stored in the memory 120 to each external apparatus 200-1, 200-2, and control the external apparatuses 200-1, 200-2 to correct their audio output characteristics according to the information.

In contrast, in a case where the audio output apparatus 100 in FIG. 1 is the sub role and the second audio output apparatus 200-1 is determined as the main role, the processor 140 corrects the audio output characteristic of the audio output apparatus 100 itself according to the audio output characteristic of the second audio output apparatus 200-1. The corrected audio output characteristic may be stored in the memory 120. The audio outputter 130 may output an audio signal according to the corrected characteristic. As the information on the audio output characteristic of another apparatus, information that was transmitted and received between each other in the process of role division may be used as it is, or information on another apparatus may be newly transmitted and received for linking audio output after role division is completed.

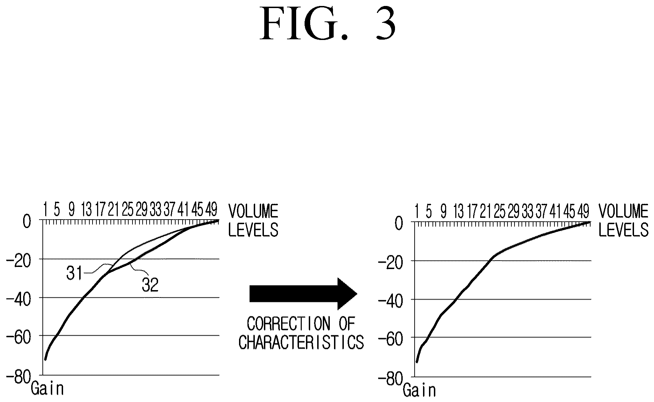

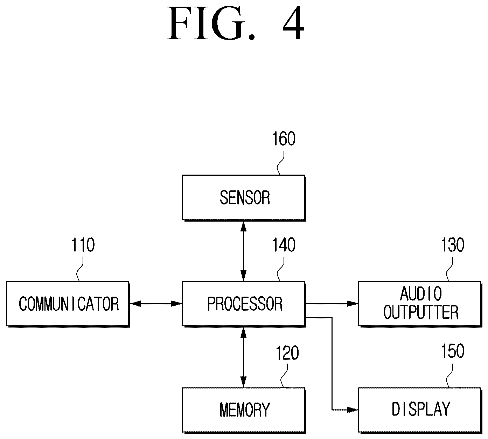

FIG. 3 and FIG. 4 are diagrams for illustrating various methods of correcting an audio output characteristic. FIG. 3 indicates a case wherein a volume curve is corrected. Hereinafter, explanation will be described based on a case wherein the second audio output apparatus 200-1 is the main role, and the first audio output apparatus 100 and the third audio output apparatus 200-2 are the sub role.

The processor 140 of the audio output apparatus 100 obtains a volume curve among the audio output characteristic information received from the external apparatus 200-1, and calculates a difference from its own volume curve. The volume curve may be measured by a changed amount of a gain according to a change of a volume level.

(a) in FIG. 3 indicates that there is a difference between the volume curve 31 of the external apparatus 200-1 which is the main role and the volume curve 32 of the audio output apparatus 100 which is the sub role in some volume levels (e.g., approximately level 17 to level 45). In other words, even if the user sets the volume identically as level 20, the size of the volume output from the audio output apparatus 100 of the sub role becomes lower than the size of the volume output from the audio output apparatus 200-1 of the main role.

The processor 140 corrects its own volume curve 32 according to the volume curve 31 of the audio output apparatus 200-1 of the main role. Here, correction means a task of the processor 140 of changing data for the volume curve 32 stored in the memory 120 to data for the volume curve 31 of the audio output apparatus 200-1 of the main role. The data for the volume curves may include data for audio amplification gains, speaker output voltages, etc. used for each audio volume. As the processor 140 controls the audio outputter 130 to adjust a volume of an audio signal according to the changed volume curve data, the volume may constitute appropriate harmony with the operation of the audio output apparatus 200-1 of the main role.

(b) in FIG. 3 indicates a corrected volume curve state. In general, products of the same company have the same data for volume curves, but this is not necessarily so, and products of other companies may be used together. Thus, if audio output characteristics are fitted with one another as above before executing the aforementioned audio synchronized output function, satisfaction felt by the user can become much greater.

A method of correcting audio output characteristics is not limited thereto, and it may be performed by various methods. As an example, volume characteristics may be fitted through output power correction. In the above, a case of correcting characteristics of the remaining apparatuses according to the characteristic of an apparatus of the main role was explained, but the disclosure is not necessarily limited thereto, and in a case where some apparatuses cannot operate according to the audio output characteristic of the apparatus of the main role, the apparatus of the main role may adjust the audio output characteristic according to the audio output characteristics of the apparatuses. Meanwhile, in a case where a difference in the audio output characteristics is big by greater than or equal to a threshold value, the audio quality may rather get worse at the time of audio synchronized output. Accordingly, in such a case, the processor 140 may provide a guide message guiding that it is a state wherein audio synchronized output is impossible, or guiding to try again by replacing the apparatus with another apparatus.

When the roles of each apparatus 100, 200-1, 200-2 are determined, the processor 140 may perform a task of dividing an audio content into a plurality of audio elements, such that one audio content can be reproduced simultaneously in each apparatus 100, 200-1, 200-2. The processor 140 may transmit an audio element corresponding to the role of the at least one external apparatus 200-1, 200-2 among the plurality of audio elements to the at least one external apparatus 200-1, 200-2 through the communicator 110. The processor 140 controls the audio outputter 130 to output an audio element corresponding to the role of the audio output apparatus 100 among the plurality of audio elements according to the output of the at least one external apparatus 200-1, 200-2.

The task of dividing an audio content into a plurality of audio elements, and dividing them into a main element and sub elements may be performed according to various standards.

For example, in the case of a multi-channel sound such as a 5.1 channel, a 6.1 channel, and a 7.1 channel, etc., the processor 140 may classify audio elements for each frequency channel. In the case of a content of a 5.1 channel, the processor 140 may divide the content into a plurality of audio elements such as a front left sound, a center sound, a front right sound, a surround left sound, a surround right sound, a subwoofer sound, etc. As in FIG. 1, if the first and second audio output apparatuses 100, 200-1 are located in the center, and the third audio output apparatus 200-2 is located in the right direction based on the user, the processor 140 may classify the center sound, the front left sound, and the surround left sound as audio elements to be reproduced in the first audio output apparatus 100, and classify the center sound, the front left sound, the surround left sound, and the subwoofer sound as audio elements to be reproduced in the second audio output apparatus 200-1 which is the main role. The processor 140 may classify the front right sound and the surround right sound as audio elements to be reproduced in the third audio output apparatus 200-2. However, this is merely an example, and the processor 140 may individually set elements to be reproduced according to the roles, the locations, and the characteristics of each apparatus.

Meanwhile, in a case where an audio content includes only a left channel and a right channel, the processor 140 may reconstitute the audio content as a left element, a center element, and a right element. The processor 140 may classify the center element among them as the main element, and classify the remaining elements as the sub elements. Alternatively, in a case as in FIG. 1, the processor 140 may classify the center element and the left element as the main elements, and classify the right element as the sub element. In the example in FIG. 1, the first audio output apparatus 100 performs the sub role, but both of the center element and the left element may be reproduced identically to the main role in consideration of the location.

Meanwhile, in the case of a content such as a drama or a movie, an audio signal may be constituted as a line, music, a sound effect, etc. The processor 140 may de-multiplex a multimedia content such as a drama or a movie, and extract video data, audio data, other data, etc. The processor 140 may decode audio data, and then obtain each of an audio element corresponding to line parts of people, and at least one audio element corresponding to the background music or other sound effects in the data. The processor 140 may determine the audio element including the lines of the people among them as the main element, and determine the remaining elements as the sub elements.

Alternatively, in a content such as a drama or a movie, a scene wherein a plurality of speakers have a conversation may be included. In this case, the processor 140 may separate voices of each speaker and classify them into a plurality of elements. For identifying a speaker, the processor 140 may consider video data together other than the audio data. Specifically, the processor 140 detects a face part within an image frame, and tracks changes of the lip part within the detected face. Among audio signals that are output by being synchronized with the image frame, the processor 140 detects an audio signal that is output on a time point when a change of the lip part is detected, and separates an audio signal of a frequency band corresponding to a person's voice within the audio signal. In a case where a plurality of characters are identified, the processor 140 identifies faces and lips of each character and assumes voices corresponding to each person. The processor 140 sets voices to be output from each apparatus by matching the locations of the characters within the image frame and the locations of each audio output apparatus 100, 200-1, 200-2. For example, in a case where three characters exist, and three audio output apparatuses are arranged side by side, the processor 140 may set such that the voice of the person on the left side, the voice of the person in the center, and the voice of the person on the right side are respectively output from the audio output apparatuses on the left side, the center, and the right side.

Alternatively, in the case of a music content, the processor 140 may classify the content into an audio element including vocal, and audio elements including sounds other than the vocal (e.g., accompaniment, etc.). The processor 140 may determine the audio element including the vocal as the main element, and determine the audio elements including the sounds other than the vocal (e.g., accompaniment, etc.) as the sub elements.

Other than the above, in the case of a piano concerto content, an element including piano sounds may be classified into a main element, and elements including sounds of other musical instruments may be classified into sub elements.

Other than the above, an audio content may be classified into a plurality of audio elements by various methods according to the types, and may then be classified into a main element and sub elements.

After allotting elements for the main and sub roles, if the audio content is changed, the processor 140 may re-classify the audio element by the aforementioned method according to the type of the audio content, and provide them respectively to the audio output apparatuses of the main and sub roles.

Meanwhile, if the state of at least one of each audio output apparatus 100, 200-1, 200-2 in charge of the main role and the sub roles is changed, the processor 140 may readjust the roles of each audio output apparatus 100, 200-1, 200-2 or audio elements to be allotted to them. For example, if the audio output state of the third audio output apparatus 200-2 to which the sub role was granted among the plurality of audio output apparatuses 100, 200-1, 200-2 reaches a limit state, the processor 140 may perform control such that the audio element that is being reproduced in the third audio output apparatus 200-2 is additionally reproduced in the audio outputter 130, or is reproduced in the second audio output apparatus 200-1. The limit state may include various states such as a case where the maximum output limit was reached, a case where the charged amount of the battery dropped to lower than or equal to a specific amount, a case where the apparatus was turned off, or the distance became far due to movement of the location, etc. The processor 140 may receive a feedback signal from the third audio output apparatus 200-2, and determine whether the audio output state is a limit state based on the feedback signal. The processor 140 may identify whether the audio output state is a limit state by checking the state of the third audio output apparatus 200-2 by a specific time cycle. Specifically, the processor 140 may transmit a query signal to the third audio output apparatus 200-2 by a specific time cycle, and if a feedback signal is not received within a predetermined time, determine that the audio output state is a limit state. In a case where a feedback signal for notifying a limit state is received within the predetermined time, the processor 140 may determine that the third audio output apparatus 200-2 is in a limit state. Even if there is no feedback signal, in a case where a part that cannot be output by the third audio output apparatus 200-2 exists in a reproduced audio content, the processor 140 may determine that the third audio output apparatus 200-2 is in a limit state. Other than the above, in an exemplary case where the locations of each apparatus are changed, the processor 140 may readjust the roles of each apparatus and audio elements to be reproduced. Detailed explanation in this regard will be described again in the parts described below.

In the embodiments above, it was explained that tasks of determination of roles of each audio output apparatus 100, 200-1, 200-2, and classification and distribution of audio elements are all performed by the processor 140 of the first audio output apparatus 100, but this is merely an example as described above, and the audio output apparatuses 100, 200-1, 200-2 may respectively perform the aforementioned tasks. After exchanging information with one another, the audio output apparatuses 100, 200-1, 200-2 may recognize the roles of themselves in consideration of a predetermined rule, the location information of each of them, and the location of the user. Also, the audio output apparatuses 100, 200-1, 200-2 may extract audio elements corresponding to their roles for the same audio content, and reproduce and output the audio elements by synchronizing them to the time points of reproduction and output of other apparatuses. As described above, subjects performing each task may vary diversely depending on embodiments. As an example, the user may directly set the roles for each apparatus and audio elements to be reproduced by each apparatus on the screen.

FIG. 4 illustrates an example of a detailed configuration of an audio output apparatus. According to FIG. 4, the audio output apparatus 100 includes a communicator 110, memory 120, an audio outputter 130, a processor 140, a display 150, and a sensor 160. Among the components in FIG. 4, regarding the components that are identical to those explained in the part of FIG. 2, overlapping explanation will be omitted.

The audio outputter 130 may reproduce and output an audio element according to control by the processor 140. The audio outputter 130 is a component for reproducing and outputting an audio content or an audio element. An audio content may include not only a music content streamed in an external apparatus (e.g., a web server, etc.), but also an audio file stored in advance in the memory 120, audio data extracted from a multimedia content, etc.

The audio outputter 130 may include at least one of various components such as a decoder for decoding audio data, a digital-analog converter for converting a decoded signal into an analog audio signal, various types of filters, an amplification circuit, a speaker, etc. Not only one speaker may be included, but at least one or more speakers may be included according to the type, the size, the specification, etc. of the audio output apparatus 100. In a case where the audio output apparatus 100 is implemented as a TV, the speaker may be arranged on the rear surface or the side surface of the display 150, or may be implemented as a front-top speaker that is arranged in the front direction on the upper side of the display 150.

The display 150 may display various screens according to control by the processor 140. The display 150 may be implemented as displays in various forms such as a liquid crystal display (LCD), an organic light emitting diodes (OLED) display, a plasma display panel (PDP), etc. Inside the display 150, driving circuits that may be implemented in forms such as an a-si TFT, a low temperature poly silicon (LTPS) TFT, an organic TFT (OTFT), etc., and a backlight unit, etc. may also be included together. Also, the display 150 may be implemented as a flexible display, or may be a touch screen on which a touch input is possible. As an example, the processor 140 may control the display 150 to display a setting screen including at least one menu among various menus such as a menu through which an audio synchronized output function can be selected, a menu through which an apparatus that can perform audio synchronized output can be selected, a menu through which the roles of each apparatus can be set, a menu for setting the classification method of audio elements, a menu for selecting audio elements to be reproduced in each apparatus, etc.

The sensor 160 may include at least one sensor for sensing the location of the audio output apparatus 100, locations and distances of external apparatuses, the location and the distance of the user, the form or the area of the space wherein the audio output apparatus 100 is arranged, movements of external apparatuses including the user, etc.

The processor 140 may determine whether the location of at least one external apparatus was changed based on the location of the audio output apparatus based on a sensing value of the sensor 160. If it is determined that the location was changed, the processor 140 may readjust each of the roles of the audio output apparatus 100 and the at least one external apparatus 200-1, 200-2.

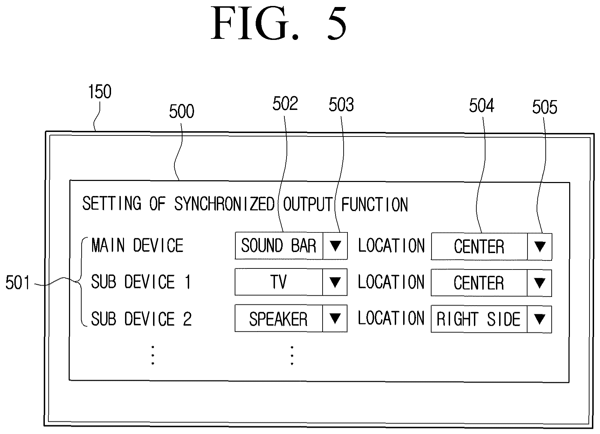

FIG. 5 illustrates an example of a configuration of a setting screen. According to FIG. 5, the display 150 may display a setting screen 500.

The setting screen 500 may display a list 501 for dividing a main device and sub devices to take part in synchronized reproduction, an input area 502 for setting each apparatus on the list, a menu 503 for changing the apparatus to be displayed in the input area 502, an input area 504 for selecting the locations of each apparatus, and a menu 505, etc. When the user selects the menu 503 for changing the apparatus, the processor 140 may display all of the connected external apparatuses 200-1, 200-2 in addition to the audio output apparatus 100 in the input area 502. Also, when the menu 505 for selecting the locations is selected, the processor 140 may display all of the locations that can be set in the form of a list in the input area 504. For example, at least one location among various locations such as the center, the front right side, the front left side, the rear right side, the rear left side, the right side, the left side, the upper center, the lower center, etc. may be displayed in the input area 504.

In the case of an environment as in FIG. 1, the user may input data in each area on the setting screen 500 as in FIG. 5. According to this, the sound bar is set as the main device, and its location is set as the center. The sub device 1 is the TV, and its location is set as the center identically to the sound bar. The sub device 2 is the speaker, and its location is set as the right side.

In the case of using the setting screen 500 as in FIG. 5, the audio output apparatus 100 may recognize the locations of the audio output apparatus 100 and the external apparatuses 200-1, 200-2 even if it does not include or use the sensor 160, or does not receive information on the external apparatuses.

Meanwhile, the processor 150 may provide various types of notification messages related to execution of the audio synchronized output function through the display 150, or provide the messages in forms of voice messages through the audio outputter 130.

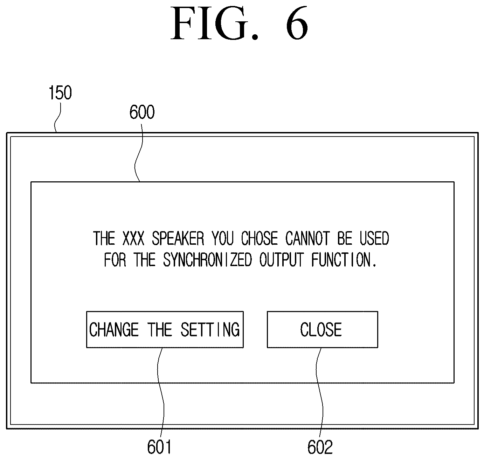

FIG. 6 illustrates an example in the case of displaying a message on a screen. According to FIG. 6, if an external apparatus wherein the audio output characteristic does not satisfy a predetermined allowable condition among the information of the at least one external apparatus exists, the processor 140 may determine that it is impossible to perform the audio synchronized output function of outputting an audio content together with the external apparatus. Accordingly, the processor 140 may display a message 600 notifying that it is impossible to perform the selected function. On the message 600, various menus such as a menu 601 for changing the setting state, a menu 602 for removing the message 600, a menu (not shown) for researching ambient external apparatuses, a menu (not shown) for changing the audio content, etc. may be included.

The allowable condition may be information that was set respectively or in combination for at least some of various audio output characteristics such as a volume curve, a sound pressure level (SPL), a maximum SPL, a headroom, input sensitivity, max power, a crossover frequency, a gain, speaker impedance, and other parameters, etc., and was stored in advance in the memory 120. For example, if an allowable condition for the maximum output difference is set as 10dB, the processor 140 determines that an audio output apparatus wherein the maximum output difference is different by greater than or equal to 10dB does not satisfy the allowable condition. In a case where there is a big difference in audio output characteristics, harmonious sound reproduction is impossible, and thus the audio synchronized output function cannot be supported.

In an exemplary case where the location of at least one of the audio output apparatus 100 or the external apparatuses 200-1, 200-2 is changed, the processor 140 may readjust at least one of the roles of each apparatus 100, 200-1, 200-2 or audio elements to be reproduced.

As in the configuration illustrated in FIG. 4, in a case where the audio output apparatus 100 includes the sensor 160, the processor 140 may directly identify the locations of each apparatus or the user based on a sensing value of the sensor 160.

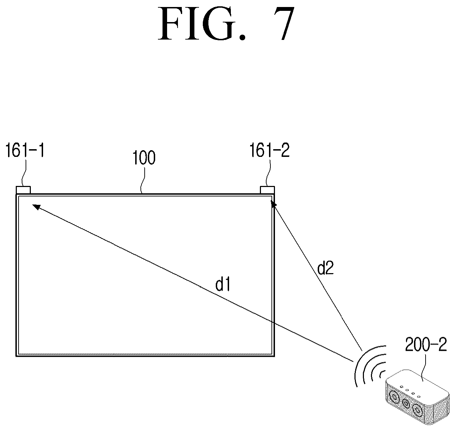

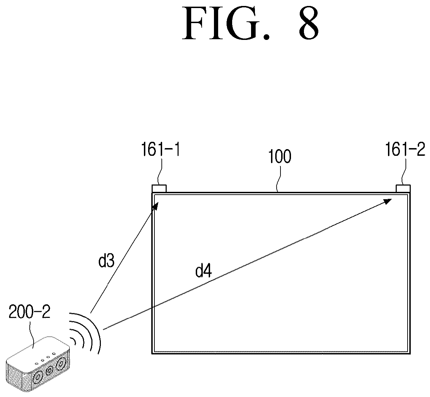

FIG. 7 and FIG. 8 are diagrams for illustrating a case of sensing a location of an external apparatus by using a plurality of microphones.

According to FIG. 7, the sensor 160 includes a plurality of microphones 161-1, 161-2 that are dispersedly arranged in different locations on the exterior of the audio output apparatus 100. FIG. 7 illustrates two microphones 161-1, 161-2 that are arranged on the rims on both sides on the upper surface of the audio output apparatus 100 implemented as a TV, but the arrangement locations or the number of the microphones may be changed variously.

While the microphones 161-1, 161-2 are activated, the processor 140 transmits a control signal to an external apparatus to output a random sound. In FIG. 7, explanation is described based on a case wherein the third audio output apparatus 200-2 in FIG. 1 is the external apparatus. The external apparatus 200-2 outputs a random test sound according to the control signal. The processor 140 compares the time points when the test sound was received at each microphone 161-1, 161-2. As a result of comparison, if the time point when the test sound was received at the first microphone 161-1 is later than the time point when the test sound was received at the second microphone 161-2, the processor 140 may determine that the first microphone 161-1 is distanced farther than the second microphone 161-2. Accordingly, the processor 140 may assume that the external apparatus 200-2 is located in the right direction wherein the second microphone 161-2 is located.

Alternatively, the processor 140 may calculate distances d1, d2 between each microphone 161-1, 161-2 and the external apparatus 200-2 based on the time points when the test sound was received at each microphone 161-1, 161-2 and the output time point of the test sound. Other than this, as the strength of a reception signal of a sound in a farther distance becomes weaker than the strength of a reception signal of a sound in a close distance, the processor 140 may also consider a difference in the strengths of reception signals other than a time difference.

FIG. 8 illustrates a case wherein the external apparatus 200-2 moved in the left direction based on the audio output apparatus 100. The processor 140 may assume the location of the external apparatus 200-2, or calculate new distances d3, d4 between each microphone 161-1, 161-2 and the external apparatus 200-2 by the various methods as described above.

As in FIG. 7 and FIG. 8, if the location of the external apparatus 200-2 performing the sub role is changed from the right side to the left side, the processor 140 may adjust audio elements to be reproduced in the external apparatus 200-2. Specifically, in a case where a plurality of elements are classified into a center sound, a front left sound, a front right sound, a surround left sound, a surround right sound, a subwoofer sound, etc., the external apparatus 200-2 may reproduce and output the front right sound and the surround right sound before its location is moved, and then reproduce and output the front left sound and the surround right sound after its location is moved. If it is detected that the external apparatus 200-2 moved to the left side, the processor 140 may control the audio outputter 130 to output the center sound, the front right sound, and the surround right sound.

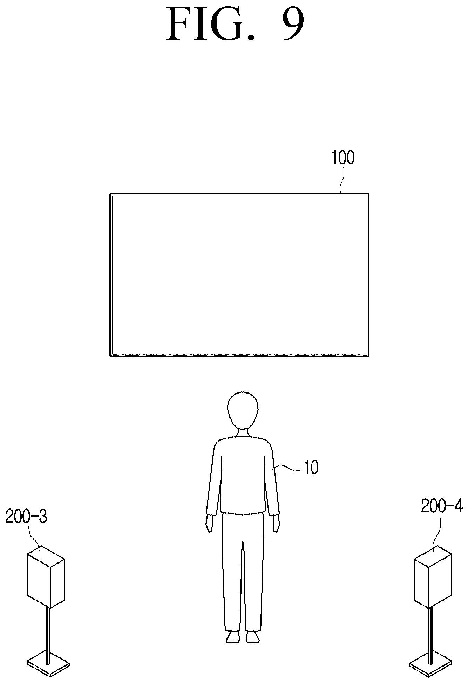

Meanwhile, FIG. 1 illustrates a case wherein a sound bar is included, but there may be a case wherein there is no sound bar. FIG. 9 illustrates a case wherein three audio output apparatuses which are not sound bars are connected with one another. For the convenience of explanation, the TV will be described as the first audio output apparatus 100 without a change, and the remaining apparatuses will respectively be described as the third and fourth audio output apparatuses 200-3, 200-4. Although reference numerals different from the speaker 200-2 in FIG. 1 were described together, but the third and fourth audio output apparatuses 200-3, 200-4 may also be implemented as apparatuses of the same type as the speaker 200-2 in FIG. 1.

According to FIG. 9, a state wherein the first audio output apparatus 100 is arranged on the front side, and the third and fourth audio output apparatuses 200-3, 200-4 are respectively arranged on the rear left side and the right side based on the user 10 is illustrated.

In this case, the first audio output apparatus 100 may take the main role, and the third and fourth audio output apparatuses 200-3, 200-4 may take the sub role based on the locations.

If an audio content can be classified into five audio elements in total such as a center sound, a front left sound, a front right sound, a surround left sound, and a surround right sound, the first audio output apparatus 100 reproduces and outputs the center sound, the front left sound, and the front right sound according to the locations. The third audio output apparatus 200-3 reproduces the surround left sound, and the fourth audio output apparatus 200-4 reproduces the surround right sound.

In such a state, in a case where the third and fourth audio output apparatuses 200-3, 200-4 respectively move to the front side of the user and are located on both sides of the first audio output apparatus 100, the first audio output apparatus 100 reproduces and outputs the center sound, the front left sound, and the front right sound without a change. In contrast, the third audio output apparatus 200-3 reproduces and outputs the front left sound and the surround left sound, and the fourth audio output apparatus 200-4 reproduces and outputs the front right sound and the surround right sound.

In such a state, if the fourth audio output apparatus 200-4 is turned off, or the battery is not sufficient, or the apparatus is distanced far, the first audio output apparatus 100 and the third audio output apparatus 200-3 may readjust at least one of the roles and the audio elements to be reproduced again. For example, the first audio output apparatus 100 may reproduce and output the front left sound, the center sound, the front right sound, and the surround right sound, and the third audio output apparatus 200-3 on the left side may reproduce and output the front left sound and the surround left sound.

As described above, according to the various embodiments of the disclosure, role division and optimized sound reproduction become possible according to the relative locations of each apparatus. Also, as audio output characteristics of other apparatuses are corrected according to an audio output characteristic of the apparatus of the main role, a sound of the same size may be output at the same volume level, and thus the user can harmoniously appreciate an audio content.

Meanwhile, in the above, explanation was described based on audio output apparatuses such as a TV, a sound bar, a speaker, etc., but such audio output apparatuses may be a portable device usually carried by the user such as a smartphone or a tablet PC. In the case of a portable device, as the user often carries it, movement of the location may be very frequent compared to other audio output apparatuses, and as the size is small, it may be difficult to recognize the device.

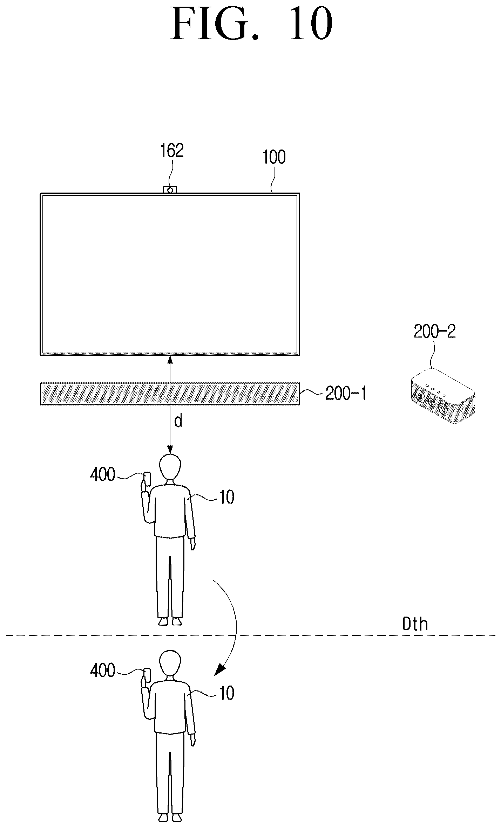

FIG. 10 is a diagram for illustrating a case wherein a portable device is included. According to FIG. 10, a case wherein the user 10 is located in front of the audio output apparatuses 100, 200-1, 200-2 in FIG. 1 while carrying a portable device 400 is illustrated. In a case where the portable device 400 is equipped with an audio output function, the portable device 400 may also be classified as an audio output apparatus.

The sensor 160 of the first audio output apparatus 100 includes various types of sensors for detecting an external apparatus or a user. For example, in a case where the sensor 160 includes an image sensor 162, the processor 140 may identify the location or the distance of an external apparatus or a user by analyzing photographing data that is photographed in the image sensor 162. In a case where the sensor 160 includes a depth camera, the processor 140 may identify the location or the distance of an external apparatus or a user based on a depth value obtained in the depth camera. In the case of the portable device 400, it can be deemed to be carried by the user 10, and thus the location or the distance of the user 10 is identified, and the point or a point within a specific range from the point may be assumed as the location or the distance of the portable device 400.

The processor 140 may determine each of the roles of four audio output apparatuses in total 100, 200-1, 200-2, 400 including the portable device 400, and then determine audio elements to be reproduced in each apparatus.

In this case, the processor 140 may, based on product information among the information transmitted from the portable device 400, recognize that the device is the portable device. If at least one external apparatus is recognized as the portable device, the processor 140 may determine roles differently according to the distance d between the audio output apparatus 100 and the portable device 400.

For example, if the distance d between the audio output apparatus 100 and the portable device 400 is within a predetermined range Dth, the processor 140 may divide a main role and a sub role based on the locations and the audio output characteristics as described above, and control each apparatus to reproduce audio elements that fit each role and location. The processor 140 may classify an audio element including voices such as lines or speech sounds of the cast in the audio content as a main element, and classify other sounds or audio as sub elements.

In contrast, if the distance d between the audio output apparatus 100 and the portable device 400 exceeds the predetermined range Dth, the processor 140 determines the portable device 400 as the main role, and determines the audio output apparatus 100 and the remaining external apparatuses 200-1, 200-2 as the sub role. If the distance d between the audio output apparatus 100 and the portable device 400 exceeds the predetermined range Dth, even if the audio output apparatus 100 and the remaining external apparatuses 200-1, 200-2 output an audio signal in any big sound, it may not be heard well by the user. In particular, in a case where speech sounds of the cast are important as in a movie or a drama, news, etc., outputting an audio signal from the portable device 400 located closest to the user 10 but not from the audio output apparatus 100 and the remaining external apparatuses 200-1, 200-2 located far away may be heard better by the user 10. Accordingly, if the distance d between the audio output apparatus 100 and the portable device 400 exceeds the predetermined range Dth, the processor 140 may automatically determine the portable device 400 as the main role.

In FIG. 10, it was explained that the audio output apparatus 100 directly senses a distance, and readjusts the roles, but the disclosure is not necessarily limited thereto. For example, if a specific signal is received from the portable device 400, the processor 140 may set the portable device 400 as the main role regardless of the distance d. The user 10 may set the portable device 400 as the main role simply by a method of pushing a button on the body of the portable device 400, or selecting a menu on the UI screen.

When the portable device 400 is determined as the main role, the processor 140 may provide an audio element including a voice among the plurality of audio elements to the portable device 400 through the communicator 110.

When the same button or menu is selected again, the processor 140 may adjust the main role and the sub role to the original state again.

Meanwhile, in a case where there are several users or the space is very broad, when separating and reproducing audio elements for audio synchronized output, users in each location may not be able to appreciate an audio content fully. The audio output apparatus 100 may identify the characteristic of the space wherein the audio output apparatus 100 is placed or the number of the user within the space, etc., and perform different control operations according to the identification result.

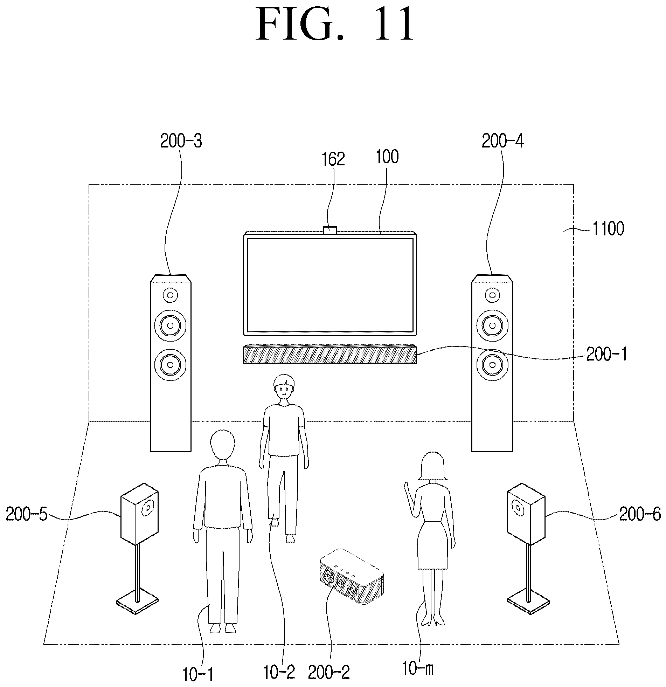

FIG. 11 is a diagram for illustrating an operation of an audio output apparatus according to another embodiment of the disclosure. According to FIG. 11, a case wherein a plurality of audio output apparatuses 200-3 - 200-6 are additionally arranged other than the audio output apparatuses 100, 200-1, 200-2 in FIG. 1, and a plurality of users 10-1 - 10m exist within the space 1100 is illustrated.

Hereinafter, explanation will be described based on a case wherein the first audio output apparatus 100 among the audio output apparatuses 100, 200-1 - 200-6 controls the remaining apparatuses, for the convenience of explanation, but the disclosure is not necessarily limited thereto, and as described above, each apparatus may identify its own role individually, and determine an audio element that it will reproduce.

In a system as in FIG. 11, the processor 140 may sense external objects by using the image sensor 162 or other sensors among the sensors 160 included in the first audio output apparatus 100. Here, the external objects include various objects such as the internal wall surfaces or objects, moving users and animals, etc. in the space 1100.

The processor 140 identifies the characteristics such as the size or the form of the space 1100 wherein the first audio output apparatus 100 is placed, the number of users, etc. based on a sensing value of the sensor 160. If the identified characteristics of the space or the number of the users respectively exceed a predetermined threshold condition, the processor 140 does not classify an audio content into audio elements, but controls the audio outputter 130 and the external apparatuses 200-1 - 200-6 to identically output the audio content as it is according to synchronization. The threshold condition may be a condition that was set by experimentally measuring a state wherein an effect of audio synchronized output is not felt. For example, in a case where eight or more users are gathered, their locations cannot help being dispersed. In this case, if an important audio element is output only from an audio output apparatus in a specific location, a user who is far away cannot hear the audio element well. Accordingly, in a case where the threshold condition is set as eight people and is stored in the memory 120, if it is detected that eight or more users exist, the processor 140 may control the entire audio output apparatuses 100, 200-1 - 200m to respectively output an audio content as it is. For distinguishing the function from the aforementioned audio synchronized output function, such a function may be referred to as a party mode function or a group play function, etc.

Taking a case wherein the threshold condition is set for the size of a space but not the number of users as an example, a numerical value such as a size of 20m2 may be set as the threshold condition and stored in the memory 120. The threshold condition for the form of a space may be set as a ratio or locations in which a pillar or a wall, a door, furniture, a home appliance, etc. are arranged within the space. For example, in a case where a wall is placed between each audio output apparatus, the processor 140 may determine that the threshold condition was exceeded.

In the above, a case wherein the locations of each apparatus or whether they moved, the distances, etc. were identified according to a sensing value of a sensor or a user's input, etc. was explained, but the locations of each apparatus or whether they moved, the distances, etc. may be identified by different methods.

For example, in a case where a robot cleaner that can generate a map while moving in a space exists, the processor 140 may receive the map generated by the robot cleaner through the communicator 110 and store it in the memory 120. In the case of a cutting-edge robot cleaner, it includes various sensors such as a LiDAR sensor, an image sensor, an infrared sensor, an ultrasonic sensor, etc., and thus not only the size or the form of the entire space, but semantic information that recognized each area or objects within the space may be generated. For example, a robot cleaner may identify that a TV is located in the center of the living room, and a sound bar is located under it, and a wireless speaker is placed on the right side of the sound bar, and generate identification information and map information regarding them. In a case where the various types of information generated by the robot cleaner is received, the processor 140 may identify the locational relation and the state of changes of the locations of the entire audio output apparatuses, the user's location, the characteristics of the space, etc. based on the information.

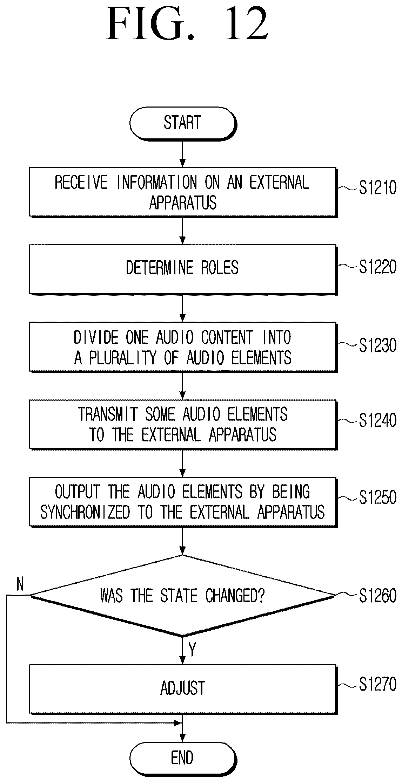

FIG. 12 is a flow chart for illustrating an output method of an audio output apparatus according to an embodiment of the disclosure. According to FIG. 12, an audio output apparatus may receive information on an external apparatus in the step S1210. In this case, the audio output apparatus may transmit information on the apparatus itself to the external apparatus, but the disclosure is not necessarily limited thereto.

The audio output apparatus may determine roles of each apparatus based on the received information and information on itself in the step S1220. When the roles are determined, the audio output apparatus may divide an audio content to be reproduced into a plurality of audio elements in the step S1230. As the methods of determining roles and dividing audio elements were explained in detail in the aforementioned several embodiments, overlapping explanation will be omitted.

The audio output apparatus may transmit an audio element corresponding to a role of at least one external apparatus among the plurality of audio elements to the at least one external apparatus in the step S1240. In this case, the audio output apparatus may transmit an appropriate audio element in consideration of not only the roles but also the location of the external apparatus together.

The audio output apparatus outputs an audio element corresponding to the role of the audio output apparatus among the plurality of audio elements according to an output of the at least one external apparatus in the step S1250. Accordingly, an audio synchronized output function by which one audio content is divided and reproduced by several apparatuses may be performed.

Meanwhile, if a state of one of the audio output apparatus or the at least one external apparatus is changed in the step S1260, the audio output apparatus may adjust at least one of the roles of each of the audio output apparatus and the at least one external apparatus or an audio element to be reproduced in the step S1270. As the method of recognizing a change of a state and the adjustment method were also explained in detail in the aforementioned several embodiments, overlapping explanation will be omitted.

In the method according to the disclosure, a change of a state may include both of a state wherein an audio signal of a specific sound range or bigger or a specific size or bigger cannot be output by an apparatus, and a state wherein the location of the apparatus becomes much farther, or an audio signal cannot be output anymore for various reasons such as the battery, a breakage, a turn-off, etc. If the apparatus that was performing the sub role reaches a limit state, the audio output apparatus may perform control such that the audio element that was output by the apparatus in the limit state can be additionally reproduced in the apparatus performing the main role.

Other than the above, in an exemplary case where a portable device is included, roles or audio elements to be reproduced may be readjusted according to the distance between the portable device and the audio output apparatus, or the distance between the portable device and the apparatus of the main role. Other than the above, the contents explained in the aforementioned various embodiments can also be included identically in the output method according to various embodiments of the disclosure.

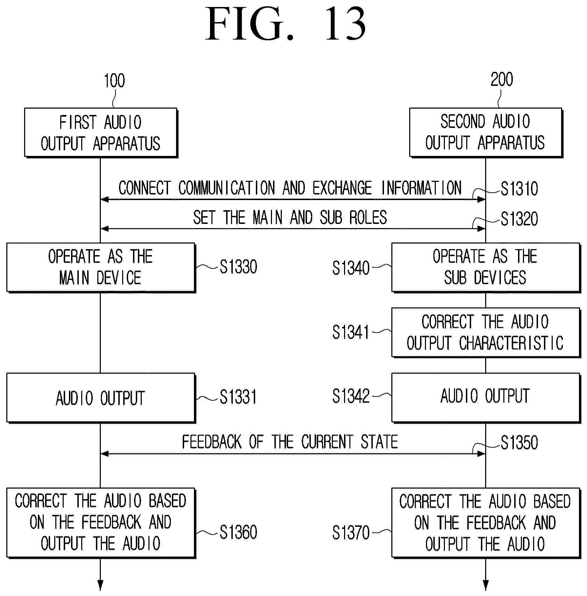

FIG. 13 is a timing diagram for illustrating interactions of a plurality of audio output apparatuses according to an embodiment of the disclosure.

For the convenience of explanation, only two apparatuses which are the first audio output apparatus 100 and the second audio output apparatus 200 were illustrated in FIG. 13, but as described above, the number of the audio output apparatuses can be changed variously.

According to FIG. 13, the first and second audio output apparatuses 100, 200 connect communication with each other, and exchange various types of information in the step S1310. As the detailed information was explained in the aforementioned other embodiments, overlapping explanation will be omitted.

The first and second audio output apparatuses 100, 200 determine the main and sub roles between each other based on the exchanged information in the step S1320. In the aforementioned other embodiments, explanation was described based on a case wherein one audio output apparatus 100 sets all of the roles of the entire apparatuses, but as illustrated in FIG. 13, each apparatus may set its own role through interactions.

Accordingly, if it is set such that the first audio output apparatus 100 operates as the audio output apparatus of the main role, i.e., the main device in the step S1330, and the second audio output apparatus 200 operates as the audio output apparatus of the sub role, i.e., the sub device in the step S1340, the first and second audio output apparatuses 100, 200 respectively perform operations corresponding to their own roles.

First, the second audio output apparatus 200 corrects its audio output characteristic according to the audio output characteristic of the first audio output apparatus 100 which is the main device in the step S1341.

In such a state, the first and second audio output apparatuses 100, 200 respectively reproduce and output audio elements corresponding to their roles in the steps S1331 and S1342.

If a specific event occurs, or a regular cycle arrives while outputting audio, the first and second audio output apparatuses 100, 200 may transmit and receive feedback signals for notifying the current state in the step S1350.

Each of the first and second audio output apparatuses 100, 200 corrects audio based on the feedback of the counterpart apparatus, and then outputs the audio. For example, in a case where the output of the second audio output apparatus 200 does not rise, the first audio output apparatus 100 may additionally reproduce the audio element of the second audio output apparatus 200.

Also, the aforementioned various embodiments may be implemented together solely or in a state wherein at least some of them are combined.

The output method explained in the various flow charts as above may be performed in the audio output apparatus 100 of the configuration illustrated in the aforementioned other embodiments, but is not necessarily limited thereto, and the method may be performed in an audio output apparatus of a different configuration. Alternatively, the method may be performed by a server device that was separately provided.

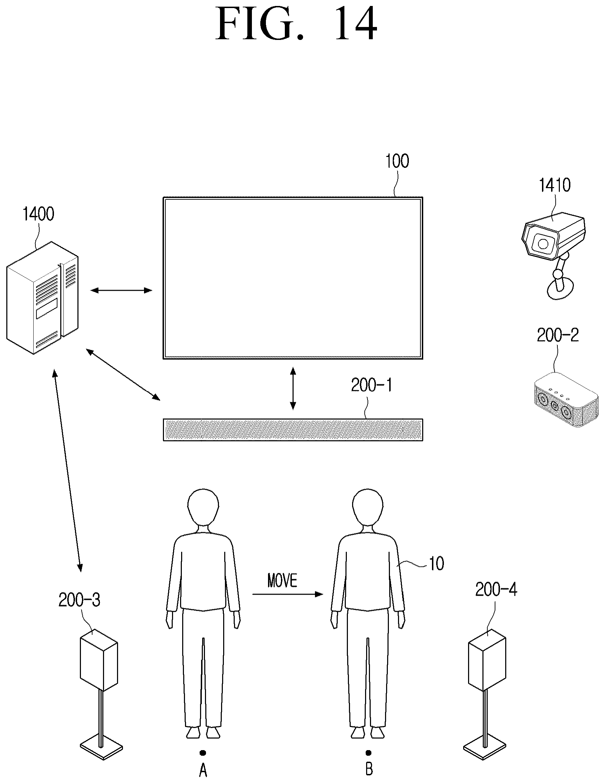

FIG. 14 is a diagram for illustrating an operation of a server device according to at least one embodiment of the disclosure. According to FIG. 14, a plurality of audio output apparatuses 100, 200-1 - 200-4, a camera 1410, and a server device 1400 may perform communication with one another.

The server device 1400 may receive photographing data photographed at the camera 1410, and identify the locations of each audio output apparatus 100, 200-1 - 200-4, the distances between each apparatus, the location of the user 10, etc. based on the photographing data. In FIG. 14, the camera 1410 and the server device 1400 were illustrated as one respectively, but the devices may be implemented as a plurality of devices depending on embodiments.

The server device 1400 may receive information of each audio output apparatus 100, 200-1 - 200-4, and store the information. If it is determined that the user selected the audio synchronized output function, the server device 1400 may identify each of a main device and sub devices based on the information of the audio output apparatuses 100, 200-1 - 200-4. For the sub devices, the server device 1400 may control them to correct their audio output characteristics according to the audio output characteristic of the main device.

If an audio content to be reproduced is selected by the user, the server device 1400 may allot audio elements to be reproduced by each audio output apparatus 100, 200-1 - 200-4 based on the roles and the locations of the audio output apparatuses 100, 200-1 - 200-4.

In such a state, if the server device 1400 identifies that the location of the user was moved from an A point to a B point, the server device 1400 may set the audio output apparatus 200-4 closest to the B point as the main device, and individually adjust the roles of the remaining audio output apparatuses. Also, the server device 1400 may reallot the audio elements to be reproduced.

As the detailed operations of role division, allotment of audio elements, etc. were explained in detail in the aforementioned other embodiments, overlapping explanation will be omitted.

As described above, control tasks such as role division, allotment of audio elements, etc. may be performed by various subjects of operations.

Also, in the aforementioned several embodiments, it was explained that apparatuses are divided into two roles which are a main role and a sub role, but a sub role may be divided into a plurality of sub roles of several ranks again according to the performances or the locations. In other words, the sub roles may be divided into several ranks such as a sub device of the first rank, a sub device of the second rank, etc.

As described above, according to the various embodiments of the disclosure, a plurality of audio output apparatuses can harmoniously reproduce and output one audio content. Even if a change of a state occurs during output, it can be coped with immediately, and the user satisfaction can thereby be maintained at the maximum.

The output method according to the aforementioned various embodiments may be stored in a non-transitory computer-readable recording medium in the form of a program code for performing the method and distributed. Specifically, a program code which, when executed by an apparatus equipped with an audio output function, performs the method according to the aforementioned various embodiments may be distributed in a state of being stored in a recording medium, or distributed online.

Here, the program code may sequentially perform the steps of receiving information on at least one external apparatus, determining roles of each of the audio output apparatus and the at least one external apparatus based on information on the audio output apparatus and the received information, dividing one audio content into a plurality of audio elements, transmitting an audio element corresponding to the role of the at least one external apparatus among the plurality of audio elements to the at least one external apparatus, outputting an audio element corresponding to the role of the audio output apparatus among the plurality of audio elements according to an output of the at least one external apparatus, and based on a state of one of the audio output apparatus or the at least one external apparatus being changed, adjusting at least one of the roles of each of the audio output apparatus and the at least one external apparatus or an audio element to be reproduced.

Other than the above, some steps may be changed or deleted, or an additional code may be used to coincide with the aforementioned various embodiments.

An apparatus on which a recording medium storing such a program code is mounted may perform operations according to the aforementioned various embodiments.

A recording medium may be various types of computer-readable media such as ROM, RAM, a memory chip, a memory card, an external hard, a hard, a CD, a DVD, a magnetic disk, or a magnetic tape, etc.

So far, the disclosure was explained with reference to the accompanying drawings, but the scope of protection thereof is determined by the claims that are described below, and should not be interpreted to be limited to the aforementioned embodiments and/or drawings. Also, it should be clearly understood that improvements, modifications, and amendments of the invention described in the claims that are obvious to a person skilled in the art are also included in the scope of protection of the disclosure.

## Claims

1. An audio output apparatus comprising:
a communicator for performing communication with at least one external apparatus;
memory storing information on the audio output apparatus;
an audio outputter; and
a processor,
wherein the processor is configured to:
based on receiving information on the at least one external apparatus through the communicator, determine roles of each of the audio output apparatus and the at least one external apparatus based on the information stored in the memory and the received information,
divide one audio content into a plurality of audio elements, transmit an audio element corresponding to the role of the at least one external apparatus among the plurality of audio elements to the at least one external apparatus through the communicator, and control the audio outputter to output an audio element corresponding to the role of the audio output apparatus among the plurality of audio elements according to an output of the at least one external apparatus, and
based on a state of one of the audio output apparatus or the at least one external apparatus being changed, adjust at least one of the roles of each of the audio output apparatus and the at least one external apparatus or an audio element to be reproduced.

2. The audio output apparatus of claim 1,
wherein the processor is configured to:
identify locations of each of the audio output apparatus and the at least one external apparatus, and based on the identified locations, determine the roles of the audio output apparatus and the at least one external apparatus respectively as one of a main role or a sub role, and
based on the locations of each apparatus being within a predetermined similar range, compare audio output characteristics among the information of each of the apparatuses, and determine the roles of the audio output apparatus and the at least one external apparatus respectively as one of the main role or the sub role.

3. The audio output apparatus of claim 2,
wherein the processor is configured to:
based on the audio output apparatus being determined as the sub role, correct audio output characteristics stored in the memory according to an audio output characteristic of an external apparatus determined as the main role among the at least one external apparatus, and control the audio outputter to reproduce an audio element corresponding to the sub role based on the corrected audio output characteristic, and
based on the audio output apparatus being determined as the main role and the at least one external apparatus being determined as the sub role, control the audio outputter to reproduce an audio element corresponding to the main role, and based on an external apparatus wherein an audio output state reached a limit state existing among the at least one external apparatus that reproduce the audio element corresponding to the sub role, control the audio outputter to additionally reproduce an audio element that was being reproduced by the external apparatus.

4. The audio output apparatus of claim 2,
wherein the processor is configured to:
based on the location of the at least one external apparatus being changed based on the location of the audio output apparatus, readjust at least one of the roles of each of the audio output apparatus and the at least one external apparatus or the audio element to be reproduced according to the changed locational relation.

5. The audio output apparatus of claim 2,
wherein the processor is configured to:
in case the at least one external apparatus includes a portable device, based on a distance between the audio output apparatus and the portable device exceeding a predetermined range, determine the portable device as the main role, and determine the audio output apparatus and the remaining external apparatuses as the sub role.

6. The audio output apparatus of claim 5,
wherein the processor is configured to:
based on the portable device being determined as the main role, provide an audio element including a voice among the plurality of audio elements to the portable device through the communicator.

7. The audio output apparatus of claim 1, further comprising:
at least one sensor for sensing an external object,
wherein the processor is configured to:
identify a characteristic of a space wherein the audio output apparatus is placed or the number of users based on a sensing value of the at least one sensor, and based on the characteristic of the space or the number of users respectively exceeding a predetermined threshold condition, control each of the audio outputter and the at least one external apparatus to output the audio content identically according to synchronization.

8. The audio output apparatus of claim 2, further comprising:
a display,
wherein the processor is configured to:
based on an external apparatus wherein the audio output characteristic does not satisfy a predetermined allowable condition among the information of the at least one external apparatus existing, control the display to output a message notifying that it is impossible to perform a function of outputting the audio content at the same time as the external apparatus.

9. An output method of an audio output apparatus, the method comprising:
receiving information on at least one external apparatus;
determining roles of each of the audio output apparatus and the at least one external apparatus based on information on the audio output apparatus and the received information;
dividing one audio content into a plurality of audio elements;
transmitting an audio element allotted to the at least one external apparatus among the plurality of audio elements to the at least one external apparatus;
outputting an audio element allotted to the audio output apparatus among the plurality of audio elements according to an output of the at least one external apparatus; and
based on a state of one of the audio output apparatus or the at least one external apparatus being changed, adjusting at least one of the roles of each of the audio output apparatus and the at least one external apparatus or an audio element to be reproduced.

10. The output method of claim 9,
wherein the determining the roles of each of the audio output apparatus and the at least one external apparatus comprises:
identifying locations of each of the audio output apparatus and the at least one external apparatus;
based on the identified locations, determining the roles of the audio output apparatus and the at least one external apparatus respectively as one of a main role or a sub role; and
based on the locations of each apparatus being within a predetermined similar range, comparing audio output characteristics among the information of each of the apparatuses, and determining the roles of the audio output apparatus and the at least one external apparatus respectively as one of the main role or the sub role.

11. The output method of claim 10,
wherein the adjusting at least one of the roles of each of the audio output apparatus and the at least one external apparatus or the audio element to be reproduced comprises:
while the audio output apparatus was determined as the main role and the at least one external apparatus was determined as the sub role, based on an audio output state of the at least one external apparatus that reproduces an audio element corresponding to the sub role reaching a limit state, outputting the audio element corresponding to the sub role in addition to an audio element corresponding to the main role.

12. The output method of claim 10,
wherein the adjusting at least one of the roles of each of the audio output apparatus and the at least one external apparatus or the audio element to be reproduced comprises:
based on the location of the at least one external apparatus being changed based on the location of the audio output apparatus, readjusting at least one of the roles of each of the audio output apparatus and the at least one external apparatus or the audio element to be reproduced according to the changed locational relation.

13. The output method of claim 10,
wherein the adjusting at least one of the roles of each of the audio output apparatus and the at least one external apparatus or the audio element to be reproduced further comprises:
in case the at least one external apparatus includes a portable device, based on a distance between the audio output apparatus and the portable device exceeding a predetermined range, determining the portable device as the main role, and determining the audio output apparatus and the remaining external apparatuses as the sub role.

14. The output method of claim 10, further comprising:
identifying a characteristic of a space wherein the audio output apparatus is placed or the number of users; and
based on the characteristic of the space or the number of users respectively exceeding a predetermined threshold condition, providing the audio content to the at least one external apparatus, and outputting the audio content identically according to synchronization to the at least one external apparatus.

15. A non-transitory computer-readable storage medium storing computer instructions which, when executed by a processor of an audio output apparatus, cause the audio output apparatus to perform operations,
wherein the operations comprise:
receiving information on at least one external apparatus;
determining roles of each of the audio output apparatus and the at least one external apparatus based on information on the audio output apparatus and the received information;
dividing one audio content into a plurality of audio elements;
transmitting an audio element allotted to the at least one external apparatus among the plurality of audio elements to the at least one external apparatus;
outputting an audio element allotted to the audio output apparatus among the plurality of audio elements according to an output of the at least one external apparatus; and
based on a state of one of the audio output apparatus or the at least one external apparatus being changed, adjusting at least one of the roles of each of the audio output apparatus and the at least one external apparatus or an audio element to be reproduced.
